# EUROPEAN PATENT APPLICATION

(11) **EP 2 428 894 A1**
(43) Date of publication of application: **14.03.2012**
(21) Application number: 11180520.6
(22) Date of filing: 08.09.2011
(51) Int. Cl.: G06F 9/54, G06F 9/46, G06F 21/00

(54) **Private application clipboard**

(30) Priority: 14.09.2010 US 881819
(71) Applicant: AppSense Limited, Daresbury Warrington Cheshire WA4 4HS (GB)
(72) Inventor: Branton, Paul Keith, Rochdale, Lancashire OL11 5NZ (GB)
(74) Representative: Brandon, Paul Laurence

(57) **Abstract**

In one embodiment, a non-transitory processor-readable medium stores code representing instructions that when executed cause a processor operating in an operating system environment that includes a clipboard function that stores information at a first memory location, to receive, from an application, a first request to store content. The code further represents instructions to store, at a second memory location, a content portion indicated by the first request, and receive, from a trusted application, a second request to retrieve the content portion. The code further represents instructions to send, to the trusted application, the content portion.

## Description

### Background

Embodiments described herein relate generally to computer clipboards, and more particularly to methods and apparatus for providing a private application clipboard.

Known computer clipboards generally allow a user of an application to "copy" or "cut" selected portions of content from within that application to a temporary location in memory referred to as a clipboard. The content portion can then be provided (or "pasted") from the clipboard to another, or the same, application running on the user's system. This functionality allows a user to transfer information from one computing context to another while avoiding the need to re-enter the desired information manually or reacquire it from an originating source.

Many organizations place limits or blocks on this functionality so as to restrict or prevent the transfer of information out of a given application. Such precautions are often taken in the interest of security, as they restrict the flow of potentially sensitive or private information to unapproved locations, channels or applications. Known solutions, however, often provide this added control at the cost of disabling basic clipboard functionality even within one or more applications. For example, in some known solutions, copy, cut and paste functionality is suspended not only to or within untrusted programs or destinations, but within all applications on a given computer. Thus, a need exists for methods and apparatus that provide private clipboard functionality to only a single or set of trusted applications.

### Summary

In one embodiment, a non-transitory processor-readable medium stores code representing instructions that when executed cause a processor operating in an operating system environment that includes a clipboard function that stores information at a first memory location, to receive, from an application, a first request to store content. The code further represents instructions to store, at a second memory location, a content portion indicated by the first request, and receive, from a trusted application, a second request to retrieve the content portion. The code further represents instructions to send, to the trusted application, the content portion.

For a better understanding of the invention, and to show how embodiments of the same may be carried into effect, reference will now be made, by way of example, to the accompanying diagrammatic drawings in which:

### Brief Description of the Drawings

FIG. 1 is a schematic diagram that illustrates the flow of data to and from a private clipboard, according to an embodiment.

FIG. 2 is a schematic diagram that illustrates a computing device configured to implement a private clipboard, according to an embodiment.

FIG. 3 is a flow chart that illustrates a method of initializing an application for interaction with a private clipboard, according to an embodiment.

FIG. 4 is a flow chart that illustrates a method of storing content to and providing content from a private clipboard, according to an embodiment.

FIG. 5 is a flow chart that illustrates a method of storing data to a private clipboard, according to an embodiment.

FIG. 6 is a flow chart that illustrates a method of providing content to a trusted application in response to a paste request, according to an embodiment.

### Detailed Description

The disclosed systems and methods can be used with one or more applications that can send a content selection for storage at a default system clipboard. The application can be any typical computing application, such as a word-processing, communication, Internet, graphics, or game application, or application of another type. The content selection can be stored at, for example, one or more memory locations associated with the default system clipboard. The application can invoke or call one or more default clipboard modules, such as one or more clipboard methods or functions, by, for example, a clipboard Application Programming Interface (API) defined by an operating system on which the application is currently executing. The clipboard API can include, for example, one or more modules configured to open, close or empty the clipboard, and/or one or more modules configured to store data at a memory location associated with the clipboard and/or retrieve data from a memory location associated with the clipboard.

A clipboard manager can execute on the operating system, and may be configured to receive notification whenever content is stored at the memory location associated with the clipboard. The clipboard manager can be any hardware-based and/or software-based module configured to maintain the status and content of one or more clipboards present on the operating system.

The clipboard discussed above may be a default system clipboard, and the clipboard manager may communicate with one or more private clipboards in addition to the default system clipboard. The one or more private clipboards may each be associated with one or more groups of one or more trusted applications. Each trusted application can be any typical computing application, and can be deemed a trusted application based on its inclusion in one or more of the groups described above. The clipboard manager may maintain a list and/or other record defining the membership of each group of one or more trusted applications. The clipboard manager can optionally send content stored at the default system clipboard to the one or more private clipboards.

Each of the one or more private clipboards described above can be associated with a unique private content memory location. For example, each of the one or more private clipboards can be associated with a memory location allocated for the storage of content "cut" or copied to (i.e., stored at) that private clipboard.

The system can further include one or more trusted applications as described above. Each trusted application can optionally receive a content selection from a user via, for example, an input peripheral or device, such as a mouse, a keyboard, a touchscreen, etc. A trusted application may send the content selection for storage at the private clipboard associated with that trusted application, for example via one or more calls to one or more alternative or "hooked" clipboard API modules, such as alternative OpenClipboard, CloseClipboard, EmptyClipboard, SetClipboardData and/or GetClipboardData modules. The hooked clipboard API modules can optionally be made operative based on one or more insertions of code into the trusted application. For example, a running process, such as a clipboard manager, can insert one or more lines of code into an application during the application startup process, the code being configured to cause the application to reference or invoke the above-described alternative clipboard API modules in lieu of one or more default clipboard API modules. The clipboard manager may enable the inserted code based on whether the initialized application is included in one or more lists of trusted applications maintained by the clipboard manager.

In some embodiments, code modules can be associated with a trusted application and can interact with the default system clipboard. For example, a code module may optionally receive one or more selections of private content from the trusted application and store the private content selection at a private memory location associated with a private clipboard also associated with that trusted application. The module may then send, for storage at a memory location associated with the default system clipboard, a text-based message indicating that the most recently stored clipboard content is "Restricted Content", such that subsequent paste requests made by non-trusted applications will return this message.

Similarly, a code module may optionally receive a request from the trusted application to retrieve and provide stored clipboard content. As part of the retrieval, the code module may communicate with the clipboard manager to determine which content, if any, to return to the trusted application. For example, if clipboard content associated with the trusted application and/or a group of trusted applications to which the trusted application belongs has most recently been stored to the private clipboard, the clipboard manager can direct the module to return that clipboard content to the trusted application. If clipboard content stored at a default system clipboard has most recently been stored, the clipboard manager may direct the code module to return that clipboard content to the trusted application. Alternatively, if no clipboard content is currently stored at either the private clipboard associated with the trusted application or the default system clipboard, the clipboard manager may instruct the code module to not return any content to the trusted application.

As used in this specification, the singular forms "a," "an" and "the" include plural referents unless the context clearly dictates otherwise. Thus, for example, the term "a module" is intended to mean a single module or a combination of modules.

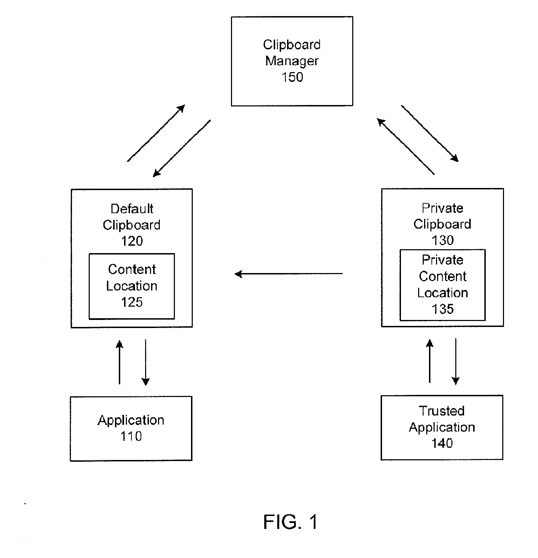

FIG. 1 is a schematic diagram that illustrates the flow of data to and from a private clipboard, according to an embodiment. More specifically, FIG. 1 illustrates the flow of a content portion between Application 110 and Trusted Application 140 via Default Clipboard 120, Private Clipboard 130 and Clipboard Manager 150. The Default Clipboard 120 includes Content Location 125 and the Private Clipboard 130 includes Private Content Location 135. As shown in FIG. 1, the Application 110 can be in communication with the Default Clipboard 120. The Default Clipboard 120 can be in communication with the Application 110, the Private Clipboard 130 and the Clipboard Manager 150. The Private Clipboard 130 can be in communication with each of the Default Clipboard 120, the Trusted Application 140 and the Clipboard Manager 150. The Trusted Application 140 can be in communication with the Private Clipboard 130 and one or more additional trusted applications (not shown in FIG. 1). The Clipboard Manager 150 can be in communication with the Default Clipboard 120 and the Private Clipboard 130.

The Application 110 can be any combination or hardware and/or software (executing in hardware) configured to provide a set of functionality to a user, for example, any valid device-based application or program such as a word-processing, messaging, web browser, productivity, or game application, or an application of another type or classification. The Application 110 may be a text- and/or graphics-based application including, for example, a user interface, such as a shell or command-line interface and/or a graphical user interface (GUI). The Application 110 may be defined and/or comprised by one or more coding instructions stored at a memory (not shown in FIG. 1). The Application 110 may be stored in or organized into an executable file, such as a .bin, .exe or other executable program file.

The Application 110 may include functionality allowing a user to copy and/or "cut" information, such as application content, to the Default Clipboard 120 and/or the Private Clipboard 130. The Application 110 may optionally allow a user of the Application 110 to utilize an input device, such as a computer keyboard or pointing device, to select one or more pieces of information or portions of content for storage at the Default Clipboard 120. In some embodiments, the Application 110 may receive a user command and/or signal instructing the Application 110 to copy or cut (i.e., store) a selected content portion from within the Application 110 at a clipboard.

The Default Clipboard 120 can be any combination of hardware and/or software (executing in hardware) configured to provide clipboard functionality to one or more applications, such as the Application 110, residing and/or executing on the same system as the Default Clipboard 120. The Default Clipboard 120 may be comprised of a combination of software modules, such as routines, subroutines, modules, functions and/or methods configured to receive selected information from an application and/or one or more memory locations associated therewith. The Default Clipboard 120 can optionally store the received information at a preselected memory location or range, such as the Content Location 125, which may be a location or range in memory defined by a host operating system. The location or range may be, optionally, statically or dynamically assigned by the host operating system and/or the Default Clipboard 120. The Default Clipboard 120 may also be configured to provide the stored information to one or more applications in response to one or more requests, such as a paste or import request. The Default Clipboard 120 may provide the stored information to the Clipboard Manager 150 for distribution to one or more other applications or clipboards, such as the Private Clipboard 130 and/or the Trusted Application 140.

The Private Clipboard 130 can be any combination of hardware and/or software (executing in hardware) configured to provide private clipboard functionality to one or more trusted applications, such as the Trusted Application 140. The one or more trusted applications may optionally comprise a trusted application group. The Private Clipboard 130 may be comprised of a combination of software modules, such as routines, subroutines, modules, functions and/or methods configured to receive selected information from an application and/or a trusted application and/or one or more memory locations associated therewith. The Private Clipboard 130 may optionally store the received information at a preselected memory location or range, such as the Private Content Location 135, which may be a location or range in memory statically or dynamically defined by one or more modules or submodules of the Private Clipboard 130. The Private Clipboard 130 can also be configured to provide the stored information to one or more trusted applications in response to one or more requests, such as a paste or import request. The Private Clipboard 130 may be further configured to communicate with the Clipboard Manager 150 to determine whether such a request has originated from a trusted application (such as the Trusted Application 140) or a typical application, such as the Application 110. The Private Clipboard 130 can receive stored information from and/or provide information to the Clipboard Manager 150.

The Trusted Application 140 may be any combination or hardware and/or software (executing in hardware) configured to provide a set of functionality to a user, for example any valid device-based application or program such as a word-processing, spreadsheet, electronic mail, graphics, or game application, or an application of another type or classification. Optionally, the Trusted Application 140 may be an application included in a group of trusted applications, i.e., a group of one or more applications configured and/or authorized to share clipboard information exclusively within the group. For example, the Trusted Application 140 may be included in a group of secure productivity applications configured to share information with one another, but not with any other applications. Management of the above-described group and enforcement of clipboard information sharing restrictions can be performed by the Clipboard Manager 150.

The Trusted Application 140 can optionally allow a user of the Trusted Application 140 to utilize an input device, such as a computer keyboard or pointing device, to select one or more pieces of information or portions of content for storage at the Private Clipboard 130. The Trusted Application 140 may receive a user command and/or signal instructing the Trusted Application 140 to copy or cut (i.e., store) a selected content portion or other information to a private clipboard, such as the Private Clipboard 130.

As shown in FIG. 1, the Application 110 can send information to the Default Clipboard 120. The Application 110 may do so via one or more calls to a system resource or object, such as one or more module, method, function, and/or system Application Programming Interface (API) calls. For example, the Application 110 can call and/or invoke one or more predefined modules associated with the Default Clipboard 120 and/or the Private Clipboard 130. The predefined modules can include, for example, one or more modules to open, empty, or close the Default Clipboard 120. The predefined modules may include one or more modules configured to store information at the Default Clipboard 120 and/or retrieve information therefrom. For example, the predefined modules can include one or more of an OpenClipboard, EmptyClipboard, SetClipboardData, GetClipboardData and/or CloseClipboard module. Thus, for example, when the Application 110 wishes to store information at the Default Clipboard 120, it can invoke and/or call an OpenClipboard module, a SetClipboardData module and/or a CloseClipboard module. In some embodiments, one or more of the above-described modules can be called and/or invoked using one or more calls to a standard or default clipboard Application Programming Interface (API) associated with one or more of: the Application 110, the Default Clipboard 120 and/or the operating system on which the Application 110 and the Default Clipboard 120 reside and/or execute.

As shown in FIG. 1, the Default Clipboard 120 can receive information from the Application 110. The information can be and/or include, for example, plain-text, obfuscated and/or encrypted text and/or graphical, audio, video and/or other multimedia and/or other content. The information can optionally be formatted and/or organized into a content object. The Default Clipboard 120 may receive the information from the Application 110 and store it at the Content Location 125. The Default Clipboard 120 can optionally clear the current contents of the Content Location 125 before storing the received information thereat, via, for example, a call to an EmptyClipboard module. The Default Clipboard 120 may store the received information as part of the execution of and/or in response to a call to a SetClipboardData module.

As further shown in FIG. 1, the Default Clipboard 120 can send stored information to the Application 110. For example, the Default Clipboard 120 can send stored information (be it information received or not received from the Application 110) in response to one or more "paste" requests or signals received from the Application 110. The Default Clipboard 120 may send the stored information as part of the execution and/or in response to a call to a GetClipboardData module. The GetClipboardData module can be invoked and/or called from the Application 110. Although not shown in FIG. 1, the Default Clipboard 120 can receive information from and/or send requested/stored information to any valid number of applications executing on one or more devices in accordance with the steps described above. The Default Clipboard 120 may receive for storage information received from one or more "non-trusted" applications, such as the Application 110. As such, in the embodiment illustrated in FIG. 1, the Default Clipboard 120 cannot, for example, receive information for storage from Trusted Application 140.

The Default Clipboard 120 can, optionally, send the received information to the Clipboard Manager 150. For example, the Default Clipboard 120 can send the received information to the Clipboard Manager 150 so that the Clipboard Manager 150 can subsequently provide the received information to one or more other clipboards or clipboard locations, such as the Private Clipboard 130. The Private Clipboard 130 can then accordingly provide the received information to a trusted application, such as the Trusted Application 140. The Clipboard Manager 150 may receive notification whenever any information or content is cut or copied on the system on which it resides. For example, the Clipboard Manager 150 can be in communication with a system process, daemon, application or other construct configured to "listen" for and/or receive notice of any newly copied or cut information received at the Default Clipboard 120 and/or the Private Clipboard 130. The Clipboard Manager 150 can then request the cut or copied information from the Default Clipboard 120 or Private Clipboard 130, by, for example, invoking a standard or alternative GetClipboardData module. The Clipboard Manager 150 can invoke the standard or alternative GetClipboardData module via, for example, an API call. In this manner, the Clipboard Manager 150 can maintain a current copy of all cut and/or copied information received at the Default Clipboard 120, the Private Clipboard 130 and/or any other default or private clipboard.

The Private Clipboard 130 can be configured to receive information copied or cut from within the Trusted Application 140 by calling, invoking or executing an alternative or "hooked" SetClipboardData module. The Private Clipboard 130 can also optionally provide stored information to the Trusted Application 140 in response to a "paste" command and/or request, such as, for example, a call to a GetClipboardData module. The call to the GetClipboardData module originating from and/or triggered by the Trusted Application 140 may include and/or result in a call to an alternative or "hooked" version of a GetClipboardData module. Such an alternative version of a GetClipboardData module may be configured to request, retrieve and/or receive private content stored by the Private Clipboard 130 at the Private Content Location 135. The Private Clipboard 130 can optionally provide information retrieved and/or received from the Clipboard Manager 150. For example, the Private Clipboard 130 can provide to the Trusted Application 140 information originally copied and/or cut from the Application 110 that has been stored at both the Default Clipboard 120 and the Clipboard Manager 150.

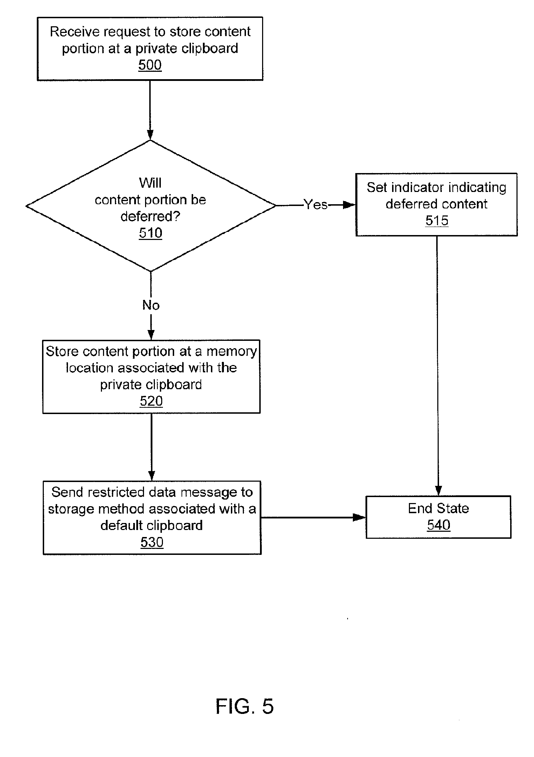

As shown in FIG. 1, in some embodiments the Private Clipboard 130 can transmit information directly to the Default Clipboard 120. For example, the Private Clipboard 130 can optionally send one or more "restricted data" messages (discussed further in connection with FIG. 5 below) for storage by the Default Clipboard 120 at the Content Location 125.

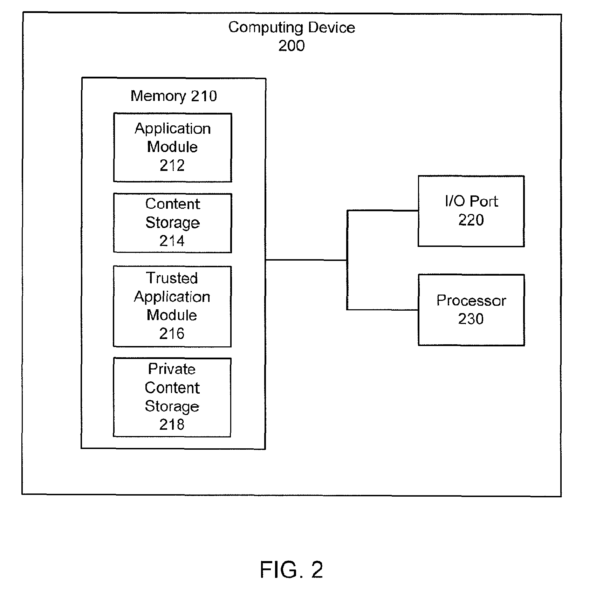

FIG. 2 is a schematic diagram that illustrates a computing device configured to implement a private clipboard, according to an embodiment. More specifically, FIG. 2 illustrates Computing Device 200 including Memory 210, Input/Output ("I/O") Port 230 and Processor 230. The Memory 210 includes Application Module 212, Content Storage 214, Trusted Application Module 216 and Private Content Storage 218. As shown in FIG. 2, each of the Memory 210, the I/O Port 220 the Processor 230 can be in communication with one another.

The Computing Device 200 can be any combination of hardware components and/or devices configured to execute one or more applications and/or trusted applications that include clipboard functionality. For example, in some embodiments the Computing Device 200 can be a hardware device, such as a desktop, server, notebook, laptop, netbook, handheld, tablet or other computer or computing device. The Computing Device 200 can optionally be a personal digital assistant (PDA), cellular telephone, smartphone, or other portable computing device. The Computing Device 200 can optionally be configured to store the Application Module 212 and/or the Trusted Application Module 216 in the Memory 210, the Application Module 212 and the Trusted Application Module 216 each being configured to cause the processor 230 to execute one or more applications (such as the Application 110 and/or the Trusted Application 140 as discussed in connection with FIG. 1 above).

The Memory 210 can be any valid memory, such as a read-only memory (ROM) or a random-access memory (RAM). In some embodiments, the Memory 210 can be, for example, any type of processor-readable media, such as a hard-disk drive, a compact disc read-only memory (CD-ROM), a digital video disc (DVD), a Blu-ray disc, a flash memory card, or other portable digital memory type. The Memory 210 can optionally be configured to send signals to and receive signals from the I/O Port 220 and/or the Processor 230.

The Application Module 212 can be any valid combination of hardware and/or software (executing on hardware) configured to present and provide an application to a user of the Computing Device 200. The Application Module 212 can be configured to cause the Processor 230 to store content at a location within the Memory 210, such as at the Content Storage 214. In some embodiments, the Application Module 212 can include code and/or instructions configured to cause the Processor 230 to store and/or retrieve content in response to one or more cut, copy and/or paste commands. The Application Module 212 can optionally receive incoming user-entered content and/or commands via the I/O Port 220.

The Content Storage 214 can store, for example, text, numeric, graphic, audio, video, and/or other content. The Content Storage 214 may store content selected and/or captured by a user of an application (not shown in FIG. 2). The Content Storage 214 can store content selected for storage at a clipboard, such as, for example, a clipboard associated with an application (such as the Application Module 212).

The Trusted Application Module 216 can be any valid combination of hardware and/or software (executing on hardware) configured to cause the Processor 230 to store private content at a location within the Memory 210, such as at the Private Content Storage 218. In some embodiments, the Trusted Application Module 216 can include code and/or instructions configured to cause the Processor 230 to store and/or retrieve private content in response to one or more cut, copy and/or paste commands received from a user of the Trusted Application 216. The Trusted Application Module 216 can optionally receive incoming user-entered content and/or commands via the I/O Port 220.

The Private Content Storage 218 can store, for example, text, numeric, graphic, audio, video, and/or other content received from one or more trusted applications. The Private Content Storage 218 may store content selected and/or captured by a user of a trusted application, such as the Trusted Application 216. The Private Content Storage 218 can store content selected for storage at a private clipboard, such as, for example, a private clipboard associated with a trusted application, such as the Trusted Application 216.

The I/O Port 220 can be any valid combination of hardware and/or software (executing on hardware) configured to receive information at and transmit data from the Computing Device 200. In some embodiments, the I/O Port 220 can be a hardware network communication device and/or a software module configured to format and transmit data to and from the hardware communication device. For example, in some embodiments, the I/O Port 220 can include and/or be operatively and/or physically coupled to an input device, such as a keyboard, touchscreen, mouse, digital stylus, trackpad, trackball, microphone, video capture card, scanner or other input device. As shown in FIG. 2, the I/O Port 220 can also transmit signals to and receive signals from the Memory 210 and/or the Processor 230.

The Processor 230 can be any valid hardware processor configured to execute instructions, such as computing instructions included in and/or defined by the Application Module 212 and/or the Trusted Application Module 216. The Processor 230 can be, for example, an application-specific integrated circuit (ASIC), a digital signal processor (DSP), a field programmable gate array (FPGA), etc. As shown in FIG. 2, the Processor 230 can transmit signals to and receive signals from the Memory 210 and/or the I/O Port 220. In some embodiments, the Processor 230 can access computing instructions in the Memory 210 for execution at the Processor 230 and then transmit information, including computed results, to the Memory 210.

In operation, the I/O Port 220 may receive a content selection. For example, the I/O Port 220 can receive a selection of content present within an application, the selection being indicated via, for example, a computer mouse. The I/O Port 220 can then transmit the content selection to the Application Module 212. The I/O Port 220 can receive a selection of content within a trusted or private application. For example, the I/O Port 220 can receive a selection of content present within a trusted application, the selection being indicated by, for example, a computer keyboard. The I/O Port 220 can then transmit the private content selection to the Trusted Application Module 216.

Upon receipt of the content selection, the Application Module 212 can transmit the content indicated by the content selection to a clipboard for storage at, for example, the Content Storage 214. The content can be stored at the Content Storage 214 in response to a copy or cut command associated with the Application Module 212, and can include a call to and/or execution of one or more of an OpenClipboard, EmptyClipboard and/or SetClipboardData module. The Application Module 212 may then access and/or retrieve the content stored at the Content Storage 214 in response to and/or as part of a paste request, a GetClipboardData call and/or other received command. The content stored at the Content Storage 214 may be provided in response to such a request or command originating within another application and/or module, such as the Trusted Application Module 216.

Upon receipt of a selection of content from within a trusted application, the Trusted Application Module 216 can transmit the content indicated by the content selection to a private clipboard for storage at, for example, the Private Content Storage 218. The content can be stored at the Content Storage 218 in response to a copy or cut command associated with the Trusted Application Module 216, and can include a call to and/or execution of one or more alternative versions of an OpenClipboard, EmptyClipboard and/or SetClipboardData module. The Trusted Application Module 216 can then access and/or retrieve the content stored at the Private Content Storage 218 in response to and/or as part of a paste request, a call to an alternative GetClipboardData module and/or other received command. The content stored at the Private Content Storage 218 can be provided in response to such a request or command originating within another application and/or module, such as the Trusted Application Module 216.

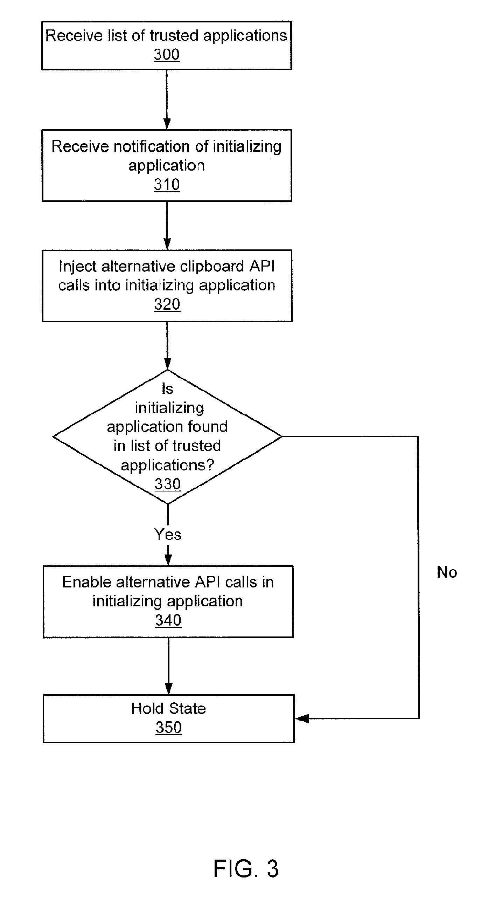

FIG. 3 is a flow chart that illustrates a method of initializing an application for interaction with a private clipboard, according to an embodiment. More specifically, FIG. 3 illustrates a method of determining whether an initializing application is included in a list of trusted applications, and enabling "detoured" or "hooked" versions of default clipboard modules if the initializing application is found in the list.

A list of trusted applications can be received at a clipboard manager, 300. The clipboard manager can be a hardware-based and/or software-based module configured to manage one or more private clipboards on a device and/or operating system. The clipboard manager can optionally be initialized along with the initialization of the operating system on which it resides and/or executes. For example, the clipboard manager can be initialized as part of the operating system startup or boot procedure. In such embodiments, the clipboard manager can run resident in memory as, for example, a service or other running program or application. The clipboard manager can optionally be initialized subsequent to the initialization or startup of the operating system on which it executes, via, for example, a user command or in response to a signal sent by one or more applications or system processes.

The list of trusted applications can include the identity or name of one or more programs or applications pertaining to at least one group of trusted applications. The list of trusted applications may be received at the clipboard manager from a database, accessed within a text or other data file, etc. The list of trusted applications can optionally be provided to the clipboard manager by any combination of a network connection, user input and/or data included in a local memory and/or one or more removable storage media. The list of trusted applications may be defined by, for example, a user of a computer network, such as a system administrator or other individual. Alternatively, the list of trusted applications may be programmatically defined based on one or more characteristics of one or more applications.

The clipboard manager can receive notification of an initializing application, 310. The clipboard manager may receive the notification via one or more "listener" processes and/or triggers defined and/or initialized along with the clipboard manager itself. Such "listener" processes can send to the clipboard manager an identity, name, process identifier ("PID") and/or other information sufficient to identify the initializing application. The initializing application can be any valid application currently initializing and/or executing on the operating system. For example, the initializing application can be a word-processing, spreadsheet, electronic mail, graphics, game, or application of another type or classification.

The clipboard manager may inject code that defines alternative clipboard API calls into the initializing application, 320. For example, the clipboard manager can perform runtime hooking and/or modification by modifying, as the initializing application has begun to execute, the code and/or binary content of the initializing application. The clipboard manager can optionally define instructions that, when activated, cause the initializing application to call alternative versions of specified clipboard-related modules in response to standard clipboard API calls. For example, the code can define instructions configured to cause the initializing application to call or invoke alternative versions of one or more of an OpenClipboard, EmptyClipboard, GetClipboardData, SetClipboardData, and/or CloseClipboard function or module. One or more alternative versions of the above-listed modules or functions may be configured to handle the processing of information and/or content for one or more private clipboards. Such alternative versions can, for example, perform similar functionality to the original module upon which they are based, but with one or more changes, code additions or code deletions configured to preserve the private nature of cut, copied, stored and/or pasted content or information received from and/or provided to one or more trusted applications. Although discussed below as being a module, it should be understood that any of the default and/or alternative module can be a method, a function, a subroutine, a module or other software- and/or hardware-based module or entity.

The clipboard manager can determine whether the initializing application is found in the list of trusted applications, 330. For example, the clipboard manager can compare the received identity information of the initializing application to one or more data fields included in the list of trusted applications to determine whether the initializing application is included in the list.

If the clipboard manager determines that the initializing application is not found in the list of trusted applications, it can conclude that the initializing application is not a trusted application and thus should not be directed to call the alternative clipboard modules and/or functions described above. Having done so, the clipboard manager can enter a hold state, 350. If the clipboard manager determines that the initializing application is found in the list of trusted applications, it can conclude that the initializing application is a trusted application, and can proceed to 340, described below.

The clipboard manager can enable the above-described alternative clipboard API calls within the initializing application, 340. In some embodiments, the clipboard manager can use one or more modules to enable the alternative clipboard API calls within the initializing application. For example, the clipboard manager can define and/or enable one or more of the same using Microsoft Detours or other similar hooking-based technology or implementation.

Having defined and enabled one or more alternative clipboard API calls within the initializing application, the clipboard manager can enter a hold state, 350. Having completed its processing, the clipboard manager can thus allow the initializing application to complete its startup operations and commence typical execution.

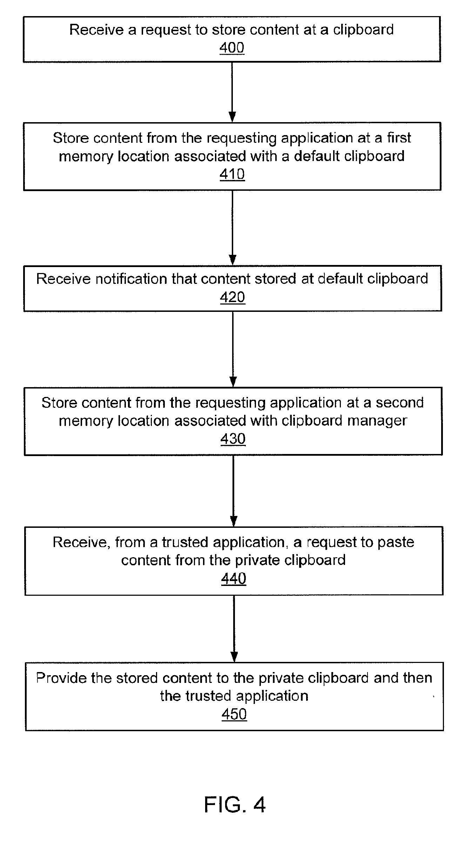

FIG. 4 is a flow chart illustrating a method of storing content to and providing content from a private clipboard, according to an embodiment. More specifically, FIG. 4 illustrates a method of storing content in response to a copy or cut command received from an application or a trusted application, and providing the content in response to a paste command received from a trusted application. In some embodiments, one or more of the steps illustrated in FIG. 4 can be performed by and/or executed at one or more of: an application, one or more default and/or alternative clipboard API functions, methods and/or modules, a clipboard manager, and/or a trusted application.

A request to store content at a clipboard can be received, 400. The request to store the content may be received at an application or a trusted application. The request can alternatively be received at a clipboard API function or method, such as a default or alternative SetClipboardData module. The request to store content can include an indication of content selected for storage. The indication may include a current memory address or other location of the indicated content. Alternatively, the request to store content can include the actual content desired for storage. The request to store content can be associated with a cut command and/or a copy command received at or by an application or a trusted application.

The indicated content can be stored at a first memory location associated with a default clipboard, 410. The indicated content may be received by, for example, a SetClipboardData module and stored at a memory location associated with a default clipboard. Alternatively, the SetClipboardData module can retrieve the content from a current memory location and copy the content to the memory location associated with the default clipboard. The SetClipboardData module may invoke or call one or more of an OpenClipboard, EmptyClipboard and/or CloseClipboard module.

A notification that the indicated content has been stored at the memory location associated with the default clipboard can be received, 420. The notification may be received at a clipboard manager process or application, which may be configured to receive a system message and/or other notification each time content is stored at the default clipboard.

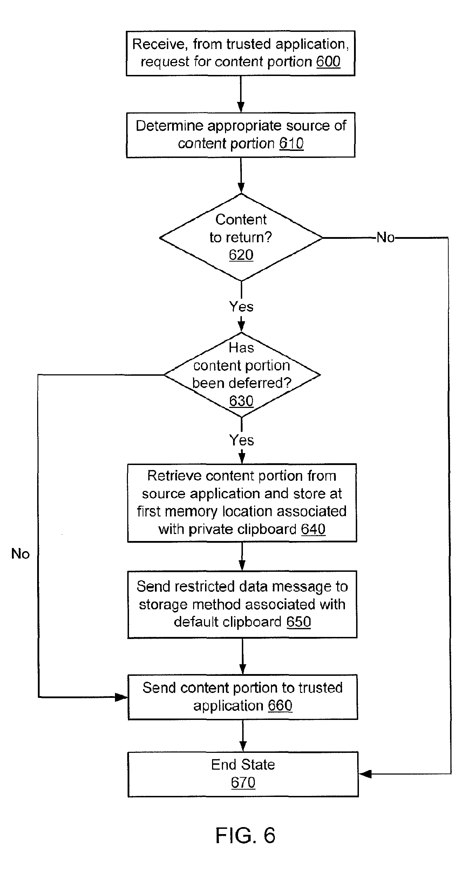

The indicated content can be stored at a second memory location associated with the clipboard manager, 430. The clipboard manager may request the indicated content from the application from which it was originally received (i.e., the "source application") in response to the notification received in 420 above. Alternatively, the clipboard manager may retrieve the indicated content from the memory location associated with the default clipboard. The clipboard manager can optionally associate the indicated content with the source application and/or one or more groups of applications to which the source application belongs. If the source application is a trusted application, the clipboard manager can associate the indicated content with one or more other trusted applications belonging and/or pertaining to the same trusted application group as the source application. By so doing, the clipboard manager can better determine to which requesting applications the indicated content can be provided (discussed in connection with FIG. 6 below).

A request to paste content from a private clipboard can be received, 440. In some embodiments, the request can be received at or from a trusted application. The request can optionally include a desired content type. The request can optionally be comprised of or include a call to or invocation of an alternative (i.e., "hooked") GetClipboardData module. The alternative GetClipboardData module can accordingly execute in response to this call or invocation, and can, for example, request stored content from a private clipboard associated with the trusted application ("the private clipboard"). The GetClipboardData module may reference a table of items indicating one or more types of content stored at the private clipboard. The table can optionally be stored and/or provided by, for example, the clipboard manager. In such embodiments, the GetClipboardData module can request only content stored at the private clipboard of the desired content type indicated by the received request to paste content.

The GetClipboardData module may determine that a memory location associated with the private clipboard is unoccupied, blank or empty, in which case the GetClipboardData module can then query the clipboard manager to determine if the clipboard manager has received and/or stored any content associated with one or more of: the trusted application, another trusted application included in the same trusted application group as the trusted application and/or another "untrusted" application. In such instances, if the clipboard manager has received and/or stored such content, it can provide that content to the GetClipboardData module.

The stored content can be provided to the private application clipboard and then to the trusted application, 450. The clipboard manager may receive the above-described query from the alternative GetClipboardData module, and, if corresponding content is found, provide (i.e., transmit) the appropriate stored content to the GetClipboardData module. The GetClipboardData module can accordingly store the received content at a third memory location associated with the private clipboard. The GetClipboardData module can then provide the stored content to the trusted application for ultimate rendering on a screen or other use by the trusted application.

FIG. 5 is a flow chart that illustrates a method of storing data to a private clipboard, according to an embodiment. More specifically, FIG. 5 illustrates a method of storing a content portion received from a trusted application to a memory location associated with the private clipboard.

A request is received to store a selected content portion at a private clipboard, 500. The request may be received at a clipboard manager module currently running or executing as an application, system process, daemon or other entity. The clipboard manager can be a hardware-based module and/or a software-based module (executing on hardware) configured to manage one or more private clipboards associated with one or more groups of one or more trusted applications and content portions associated therewith.

The request can alternatively be received at a module for setting and/or storing clipboard data, such as an alternative SetClipboardData module associated with one or more trusted applications as discussed in connection with FIG. 4 above. The receiving module, such as an alternative SetClipboardData module, can be called or invoked from within an application, such as the Application 110 and/or the Trusted Application 140 discussed in connection with FIG. 1 above. The invoking or calling application may optionally first call or invoke a module configured to open the private clipboard, prior to calling or invoking the receiving module. The module configured to open the private clipboard can be, for example an alternative OpenClipboard module.

The invoking or calling application may be a trusted application at which a user has indicated a desire to store a selected content portion at a clipboard associated with that trusted application. The selected content portion can optionally be selected by a user of the invoking or calling application, via, for example, a peripheral input device such as a mouse, keyboard, touchscreen, or other input device. When called, the receiving module may receive a global memory location, or "globalAlloc" object created by the invoking or calling application.

The receiving module (be it a clipboard manager module or a module for setting clipboard data, such as a SetClipboardData module) can determine whether the selected content portion is to be deferred, 510, such that it is not actually stored at a memory location associated with a clipboard until that selected content portion is requested for retrieval via, for example, a paste command or request. For example, the receiving module can receive, along with the store request described in connection with 500 above, a signal indicating that the selected content portion is to be deferred. The receiving module can proceed to 515 if the signal indicates that the selected content portion is to be deferred. The receiving module can proceed to 520 if the signal indicates that the selected content portion is not to be deferred.

The receiving module can set a flag or indicator indicating that the selected content portion has been deferred, 515. The receiving module may send a signal to the clipboard manager module indicating that the selected content portion associated with the trusted application has been deferred. The receiving module can optionally send a message or other text-based content for storage at a memory location associated with the private clipboard, the message containing a text-based indication that the content portion most recently selected for storage at the private clipboard has been deferred. Having set the appropriate deferred content indicators, the receiving module can enter the end state, 540.

If the selected content portion is to not be deferred, the receiving module can store the selected content portion at a memory location associated with the private clipboard, 520. The receiving module can optionally send one or more signals to the clipboard manager described above. The one or more signals can optionally indicate, for example, that the selected content portion has been stored at the private clipboard associated with the trusted application, the size and/or data type of the stored content portion and/or the content portion itself. The clipboard manager may use this information to administer one or more requests received from one or more applications or trusted applications. This functionality is further detailed in connection with FIG. 6 below.

The receiving module can send a restricted data message to a storage function associated with a default system clipboard, 530. The receiving module may send an indicator and/or a text-based message to a storage module, method or function associated with the default system clipboard. For example, the receiving module can send a message with text such as "Restricted Data" to a default SetClipboardData module such that the default SetClipboardData stores the text to a memory location associated with the default system clipboard. Accordingly, the default GetClipboardData module associated with the default clipboard will return to applications and/or users requesting the stored content portion the text indicating that the requested data is restricted and thus cannot be pasted into or retrieved by that application.

Having stored the selected content portion to a memory location associated with the private clipboard and provided a restricted data message to the default system clipboard, the receiving module can enter the end state, 540.

FIG. 6 is a flow chart that illustrates a method of providing content to a trusted application in response to a paste request, according to an embodiment.

A request for a content portion is received, 600. The request may be received from and/or within a trusted application included in a group of one or more trusted applications. The group of one or more trusted applications can optionally be associated with a clipboard manager. The clipboard manager can be, for example, a hardware- and/or software-based module configured to manage one or more groups of one or more trusted applications and/or content stored at a private clipboard associated with each such group. The request for a content portion can be received at a module, method or function associated with the private clipboard with which the trusted application is also associated ("the private clipboard"), such as, for example, an alternative GetClipboardData module. The alternative GetClipboardData module may be included in the trusted application. Alternatively, the alternative GetClipboardData module can be called or invoked from the trusted application by means of a "hooked" clipboard API call (as discussed in connection with FIG. 3 above). The request for a content portion may be received at another hardware- and/or software-based module, such as the clipboard manager or another module.

The receiving module (such as the alternative GetClipboardData module) can determine the appropriate source of the requested content portion, 610. More specifically, the receiving module can determine whether to respond to the request for a content portion with content stored at the private clipboard, with content stored at a default system clipboard, or with no actual content. For example, the receiving module can query the clipboard manager to determine from which source the receiving module should retrieve a content portion for transmission to the trusted application. The query can include, for example, an identity of the trusted application, the identity including, for example, an application name, application type and/or process identifier (PID).

In some embodiments, the clipboard manager can receive the above-described query from the receiving module. Upon receiving the query, the clipboard manager can indicate to the receiving module that it should provide content from whichever among the default system clipboard and the private clipboard has most recently received and stored content. The clipboard manager may define its indication to the receiving module based on a priority order, by, for example, indicating that the receiving module should provide content from the private clipboard if any is currently stored thereat, or from the default system clipboard if no content is currently stored at the private clipboard. Alternatively and conversely, the clipboard manager may indicate to the receiving module that it should provide content from the default system clipboard if any is currently stored thereat, or from the private clipboard if no content is currently stored at the default system clipboard. If both the private clipboard and the default system clipboard are "empty", i.e., if neither currently has content stored thereat, the clipboard manager can indicate that the receiving module should not provide any content to the trusted application in response to the received request.

Based on the determination made in 610 above, the receiving module can determine whether it any valid content portion is stored at the private clipboard or the default system clipboard that can be returned to the trusted application, 620. If the receiving module determines that no valid content portion is stored at either clipboard, it can proceed to an end state, 670. Having terminated, the receiving module thus will not return any content portion to the trusted application. Alternatively, the receiving module may return a text or alert message to the trusted application indicating that the clipboard is "empty" and/or that no available content exists for pasting into the trusted application. If the receiving module determines that a valid content portion is currently stored at the default system clipboard and/or the private clipboard, it can proceed to step 630, discussed below.

The receiving module can next determine whether the content portion associated with the appropriate source has been deferred, 630. Having determined from which source to seek the requested content portion (in 610 above), the receiving module can optionally reference one or more flags or indicators associated with the private clipboard to determine if the targeted content portion has been deferred. To do so, the receiving module can, for example, reference a variable or other value associated with the private clipboard that indicates whether content associated with the private clipboard has been deferred.

If the requested content portion has not been deferred, the receiving module can proceed to 670, discussed below.

If the requested content portion has been deferred, the receiving module can retrieve the requested content portion from the source application and store the content portion at the private clipboard, 640. In some embodiments, the requested content portion can be retrieved from the application in which the content portion is currently present (i.e., the "source application"). More specifically, the receiving module can access a memory location associated with the source application to retrieve the content portion. The retrieval can be performed by a call to a module for setting clipboard data, such as, for example, an alternative SetClipboardData module. In some embodiments, the alternative SetClipboardData module can be called and/or invoked by an alternative GetClipboardData module. Once the content portion has been retrieved, the retrieving entity (such as the alternative SetClipboardData module) can store the content portion at a first memory location associated with the private clipboard.

The receiving module can send a restricted data message to a storage module associated with a default system clipboard, 650. In some embodiments, the receiving module can send an indicator and/or an actual text-based message to a storage module, method or function associated with the default system clipboard. For example, the receiving module can send a message with text such as "Restricted Data" to a default SetClipboardData module such that the default SetClipboardData stores the text to a memory location associated with the default system clipboard. Accordingly, the default GetClipboardData module associated with the default clipboard will return "Restricted Data" to applications and/or users requesting the stored content portion.

The receiving module can send the requested content portion to the trusted application, 660. In some embodiments, the receiving module can send the content portion and/or a memory location associated with the private clipboard at which the content portion is stored. The trusted application can accordingly receive the content portion for display to a screen or output device, or other use within the trusted application.

Having sent the requested content portion to the trusted application, the receiving module can enter the end state, 670.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices.

Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using Java, C++, or other programming languages (e.g., object-oriented programming languages) and development tools. Additional examples of computer code include, but are not limited to, control signals, encrypted code, and compressed code.

While various embodiments have been described above, it should be understood that they have been presented by way of example only, not limitation, and various changes in form and details may be made. Any portion of the apparatus and/or methods described herein may be combined in any combination, except mutually exclusive combinations. The embodiments described herein can include various combinations and/or sub-combinations of the functions, components and/or features of the different embodiments described. For example, in some embodiments a non-transitory processor-readable medium can store code configured to provide two or more private clipboards for use by one or more trusted applications.

## Claims

1. A non-transitory processor-readable medium storing code representing instructions that when executed cause a processor operating in an operating system environment that includes a clipboard function that stores information at a first memory location, to:
receive, from an application, a first request to store content;
store, at a second memory location, a content portion indicated by the first request;
receive, from a trusted application, a second request to retrieve the content portion; and
send, to the trusted application, the content portion.

2. The non-transitory processor-readable medium of claim 1, wherein the trusted application is a first trusted application and the application is a second trusted application.

3. The non-transitory processor-readable medium of claim 1, wherein the trusted application is a first instance of the trusted application and the application is a second instance of the trusted application.

4. The non-transitory processor-readable medium of claim 1, wherein the application and the trusted application are the same application.

5. A method, comprising:
receiving, from a trusted application, a request to store a content portion;
determining whether the content portion is deferred;
if the content portion is not deferred:
storing, at a memory location, the content portion; and
providing, to a default content storage function, a restricted data message; and
if the content portion is deferred, providing, to the default content storage function, an indicator that the content portion is deferred.

6. The method of claim 5, wherein the trusted application is a first trusted application, further comprising:
receiving, from a second trusted application, a request for the content portion; and
if the content portion is not deferred:
accessing, from the memory location, the content portion; and
providing the content portion to the second trusted application.

7. The method of claim 5, wherein the content portion includes at least one of:
text content;
graphical content;
audio content;
video content; and
content of a custom type.

8. The method of claim 5, wherein each instance of the trusted application is associated with its own distinct memory location.

9. A method, comprising:
receiving, from a trusted application, a request for an indicated content portion, the request being associated with a first memory location;
if the indicated content portion is deferred:
retrieving, from a predetermined application, the indicated content portion; and
storing, at a second memory location, the indicated content portion;
retrieving, from the second memory location, the indicated content portion;
storing, at the first memory location, the indicated content portion; and
providing, to the trusted application, the indicated content portion.

10. The method of claim 9, further comprising:
storing, after the retrieving from the second memory location, a restricted data message at the second memory location.

11. The method of claim 9, wherein the request is a first request, further comprising:
receiving, from an application, a second request for the indicated content portion; and
providing, to the application, a restricted data message.
